# FASCICULE DE BREVET EUROPEEN

(11) **EP 3 953 302 B1**
(45) Date de publication et mention de la délivrance du brevet: **26.11.2025**
(21) Numéro de dépôt: 20717201.6
(22) Date de dépôt: 09.04.2020
(51) Int. Cl.: C01B 33/158, C01B 33/159

(54) **PROCÉDÉ DE SYNTHÈSE D'UN AÉROGEL DE SILICE HYDROPHOBIQUE DE TYPE"ONE POT"À PARTIR D'UN PRÉCURSEUR DE SILICE**
VERFAHREN ZUR HERSTELLUNG EINES HYDROPHOBEN EINTOPF-KIESELSÄUREAEROGELS AUS EINEM KIESELSÄUREVORLÄUFER
PROCESS FOR SYNTHESISING A "ONE POT" HYDROPHOBIC SILICA AEROGEL FROM A SILICA PRECURSOR

(30) Priorité: 10.04.2019 FR 1903843
(43) Date de publication de la demande: 16.02.2022
(73) Titulaire: Keey Aerogel, 68440 Schlierbach (FR)
(72) Inventeur: RUIZ-GONZALEZ, Francisco-Manuel, 4058 BALE (CH); PHILIPPE, Kanda, 68990 GALFINGUE (FR)
(74) Mandataire: Lavoix
(86) Numéro de dépôt international: PCT/EP2020/060251
(87) Numéro de publication internationale: WO 2020/208186

(56) Documents cités:
- WO-A1-2016/178560
- WO-A1-2017/155311
- WO-A1-2018/049965
- US-A1- 2016 258 153
- NAGARAJA D HEGDE ET AL: "Two step sol-gel processing of TEOS based hydrophobic silica aerogels using trimethylethoxysilane as a co-precursor", JOURNAL OF POROUS MATERIALS, KLUWER ACADEMIC PUBLISHERS, BO, vol. 14, no. 2, 26 January 2007 (2007-01-26), pages 165 - 171, XP019504814, ISSN: 1573-4854, DOI: 10.1007/S10934-006-9021-2

## Description

La présente invention concerne la synthèse d'aérogel de silice, avec un co-précurseur de « type one pot ».

Les aérogels de silice sont des matériaux nano-poreux avec une structure à pore ouvert, qui ont d'excellentes propriétés telles qu'une basse densité, une transparence réglable, une forte porosité et une grande surface spécifique, ainsi qu'une faible conductivité thermique. Ces propriétés sont particulièrement intéressantes dans un grand nombre d'applications, notamment dans la construction et l'isolation des bâtiments. Cependant, la structure des aérogels de silice se dégrade dans le temps en raison de l'interaction entre les groupes OH sur l'atome Si et la liaison hydrogène de l'eau dans un environnement humide. Il en résulte alors un affaiblissement, voire une fragmentation de la structure.

Dans le domaine de de l'isolation thermique, il est important que les aérogels de silice aient des propriétés hydrophobes. Il existe trois techniques essentielles pour faire des aérogels de silice hydrophobe : par méthoxylation, silylation et co-précurseur (Anderson et al., 2011, Aerogel Book, Advances in sol-gel derived materials and technology, 47-77)*.* Ces méthodes impliquent le remplacement d'un groupe hydroxyl par un groupe Si-R hydrolytiquement instable, conduisant à des aérogels hydrophobiques. La méthoxylation consiste à chauffer l'aérogel hydrophile en présence de vapeur de méthanol pour convertir les groupes Si-OH en groupe Si-OCH₃. Les principales limitations de cette technique sont liées aux difficultés associées avec les hautes températures qui sont nécessaires, ainsi que la dangerosité des conditions opératoires.

La silylation implique la modification de la surface des gels humides avant le séchage avec différents agents silylant. Les gels humides sont préparés en utilisant des techniques sol/gel standard puis par échange de solvants, et un trempage des gels humides dans un agent silylant. Les inconvénients de cette technique incluent la durée importante et la consommation conséquente d'agents silylants et de solvants.

Les méthodes par co-précurseur impliquent le remplacement de précurseurs alkoxydes de silice comme par exemple le tétraéthylorthosilicate (TEOS), tétraméthylorthosilicate (TMOS), et autres précurseurs, avec une certaine quantité d'organosilanes, tels que le méthyltriméthoxysilane (MTMS), et le triméthyléthoxysilane (TMES) etc... Cette méthode est aisée, et nécessite un temps de préparation minime, mais le coût des précurseurs alkoxydes et des organo-silanes représente un obstacle pour son industrialisation.

WO 2017/155311 et US 2016/258153 décrivent des procédés de préparation d'un aérogel de silice hydrophobe impliquant la préparation d'un gel humide intermédiaire préalable à l'hydrophobiosation.

WO 2016/178560 décrit un procédé de préparation d'un aérogel de silice hydrophobe impliquant la préparation de plusieurs mélanges réactionnels dans des réacteurs séparés.

WO 2018/049965 décrit n procédé impliquant la préparation d'une microémulsion.

Nagaraja et al Journal of Porous Materials, vol. 14, no. 2, 2007 pages 165-171 décrit une méthode de synthèse impliquant le précurseur TEOS (tetraéthoxysilane) et TMES (triméthyléthoxysilane).

Par conséquent, il reste à mettre à disposition une méthode pour préparer des aérogels de silice hydrophobe de faible coût.

La présente invention fournit une telle méthode, par synthèse par co-précurseur, au moyen d'un précurseur de silice à faible coût.

Cette méthode combine plusieurs avantages et permet de fait une réduction des coûts en remplaçant le précurseur alkoxyde, et en diminuant la durée nécessaire pour la synthèse, compatible avec une préparation à l'échelle industrielle.
Ainsi, selon un premier objet, la présente invention concerne un procédé de préparation d'un aérogel de silice hydrophobe par synthèse « one pot » au moyen d'un précurseur de silice aqueux comprenant les étapes suivantes :; - ii) mélange dudit précurseur de silice éventuellement traîté préalablement par i) passage d'une solution aqueuse dudit précurseur de silice contenant entre 4 et 31% en poids de SiO₂ à travers une résine échangeuse d'ions ; et d'un ou plusieurs alcools et ajustement à un pH compris entre 0 et 5 ;
- iii) ajout d'un organo-silane ;
- iv) gélification humide hydrophobe en présence d'une solution basique en tant que catalyseur ;
- v) séchage afin d'obtenir l'aérogel de silice hydrophobe ; tel que le silane organique est choisi parmi les composés de formule (I) : 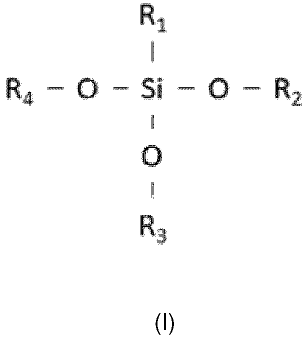
dans laquelle chacun des groupes R₁-R₄ identique ou différents est choisi indépendamment parmi les groupes alkyle en C1-C12 linéaire ou ramifié, ou les groupes alkènyle en C2-C12 linéaire ou ramifié.

De préférence, les étapes ci-dessus sont faites dans l'ordre ii)-iii)-iv)-v).

Tel qu'utilisé ici, l'expression « one pot » désigne le fait que les étapes de synthèse ii), iii), iv) et éventuellement i) sont faites dans le même réacteur, par mélange simultané des différents ingrédients ou par mélange séquentiel. Selon un mode de réalisation, le procédé comprend l'étape préalable i) du passage d'une solution aqueuse de précurseur de silice contenant entre 4 et 31%, notamment entre 4 et 14%, préférablement 4 et 8% en poids de SiO₂ à travers une résine échangeuse d'ions.

Selon un mode de réalisation le précurseur de silice aqueux est choisi parmi les solutions de silicate de sodium, solutions colloïdales de silice, les solutions de silice extraites d'une source riche en silice, telles que les déchets de bâtiments et de démolitions, les déchets de matériaux d'isolation à base de silice, le verre, et leurs mélanges. Typiquement, la solution de précurseur est une solution de silicate, telle qu'une solution de silicate de sodium.

Généralement, la solution de précurseur de silice contient entre 4 et 8% en poids de SiO₂, typiquement environ 6% en poids, avant passage dans la résine échangeuse d'ions.

Typiquement, la solution de silicate contient environ 6% en poids de SiO₂.

On entend par « acide silique », l'acide ortho-silicique de formule H₄SiO₄.

A titre de résine échangeuse d'ions, on peut notamment citer les résines porteuses de groupements ionisables insolubles dans la solution aqueuse de précurseur, et ayant la propriété d'échanger de façon réversible, certains de leurs cations H⁺, au contact des contre-ions du silicate provenant de ladite solution de précurseur. A titre de résine échangeuse d'ions, on peut donc citer les résines échangeuses de cations et notamment les résines de type Amberlite^{®}, telles que la résine Amberlite^{®} IR-120H+ notamment.

A la sortie de la colonne une solution d'acide silicique est obtenue, généralement de même concentration que la concentration de la solution de départ en SiO₂.

Selon un mode de réalisation, ledit alcool additionné à l'acide silicique est choisi parmi le groupe consistant en éthanol, méthanol, alcool isopropylique, et leurs mélanges.

La quantité d'alcool ajouté dépend généralement des propriétés désirées pour l'aérogel ; généralement, l'alcool est ajouté à hauteur comprise entre 10 et 40 % en poids/volume par rapport à la solution d'acide silicique.

L'ajustement du pH peut être avantageusement effectué par ajout d'un acide, tel qu'un acide inorganique. Selon un mode de réalisation, l'acide inorganique est choisi parmi l'acide chlorhydrique, l'acide nitrique, l'acide sulfureux et l'acide oxalique, et leurs mélanges. Typiquement, la concentration de l'acide inorganique est comprise entre 0,1 et 2 mol.l⁻¹.

Le silane organique est choisi parmi les composés de formule (I) : 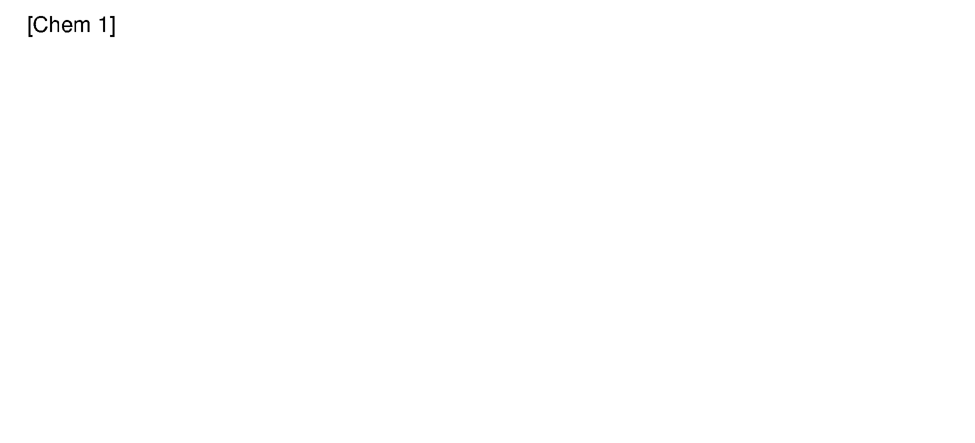 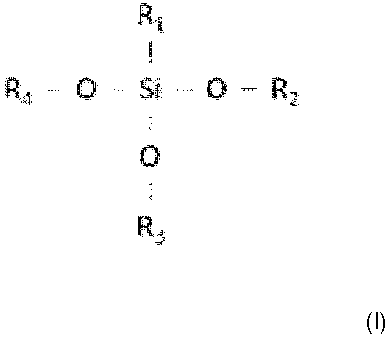 dans laquelle chacun des groupes R₁-R₄ identique ou différents est choisi indépendamment parmi les groupes alkyle en C1-C12 linéaire ou ramifié ou les groupes alkènyle en C2-C12 linéaire ou ramifié

Particulièrement, le silane organique est choisi parmi le méthyltriméthoxysilane, méthyltriéthoxysilane, vinyltriméthoxysilane, isobutyltriéthoxysilane et isobutyltriméthoxysilane.

Selon la présente invention, les radicaux Alkyle représentent des radicaux hydrocarbonés saturés, en chaîne droite ou ramifiée, de 1 à 12 atomes de carbone, de préférence de 1 à 5 atomes de carbone.

On peut notamment citer, lorsqu'ils sont linéaires, les radicaux méthyle, éthyle, propyle, butyle, pentyle, hexyle, octyle, nonyle, décyle, dodécyle, hexadécyle, et octadécyle. On peut notamment citer, lorsqu'ils sont ramifiés ou substitués par un ou plusieurs radical alkyle, les radicaux isopropyle, tert-butyl, 2-éthylhexyle, 2-méthylbutyle, 2-méthylpentyle, 1-méthylpentyle et 3-méthylheptyle.

Les radicaux Alkényle représentent des radicaux hydrocarbonés en C2-C12, notamment C2-C6, en chaîne droite ou linéaire, et comprennent une ou plusieurs insaturations éthyléniques. Parmi les radicaux Alkènyle, on peut notamment citer les radicaux allyle ou vinyle.

Selon un mode de réalisation, le gel humide comprend de 1 à 15% en poids de silane organique.

Selon un mode de réalisation particulier, la synthèse et la gélification sont effectuées à température et pression contrôlées, généralement comprise entre 15 et 30°C, et de 1 à 200 bar, respectivement.

Selon un mode de réalisation, la solution aqueuse basique est une solution d'ammoniaque, typiquement ayant une concentration comprise entre 0,1 et 2 mol.l⁻¹.

Généralement, après sa formation à l'issue de l'étape iv), le gel humide est sujet à mûrissement. Généralement, ceci est réalisé pendant une durée comprise entre 0 et 24 h.

Après mûrissement, le gel peut être lavé. Généralement, le lavage est réalisé au moyen d'un solvant organique, tel qu'un alcool, et plus particulièrement l'éthanol.

Le mûrissement et/ou lavage est généralement effectué dans des conditions contrôlées de température et de pression, typiquement à température comprise entre 20 et 50°C et une pression comprise entre 1 et 200 bars, respectivement.

Le gel humide peut être préparé sous toute forme connue en soi, telle que sous forme de monolithe, granulés, ou composite avec des fibres organiques ou inorganiques.

Le gel est ensuite séché : l'étape de séchage v) est typiquement réalisée par évaporation à pression ambiante ou par mise en réaction du mélange réactionnel obtenu avec un ou plusieurs fluides dans des conditions supercritiques, afin d'éliminer le solvant organique de la matrice du gel sans créer de tension dans la structure poreuse.

Généralement, ceci peut être effectué par séchage au CO₂ basse température supercritique (LTSCD).

Selon un mode de réalisation illustratif, le procédé de préparation comprend les étapes suivantes, en mélange simultané ou séquentiel:
a) La préparation d'une solution d'acide silicique par passage d'une solution de silicate dans une résine échangeuse d'ions ;
b) Le mélange de la solution d'acide silicique avec un alcool organique ;
c) L'ajustement du pH du mélange à pH compris entre 0 et 5. par ajout d'un acide inorganique ;
d) L'ajout d'un organo-silane à une concentration de 1 à 15% du mélange réactionnel ;
e) Ajout d'une solution d'ammoniaque à concentration comprise entre 0.1 et 2 mol.l⁻¹ ;
f) Mûrissement et lavage à température et pression contrôlées du gel obtenu ;
g) Séchage par CO₂ basse température supercritique (LTSCD).

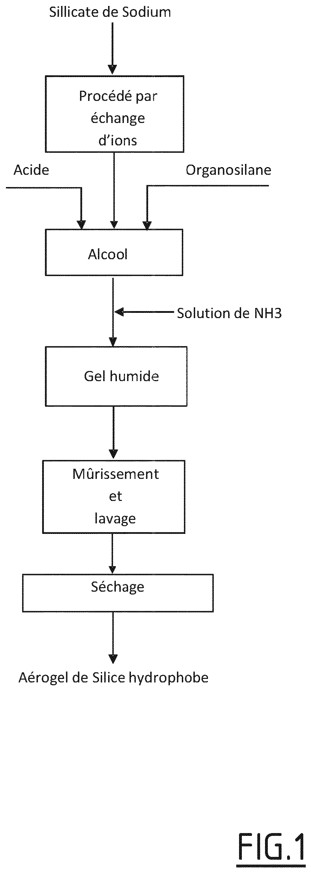

[Fig 1] La figure 1 représente un schéma de la méthode de préparation d'un aérogel de silice hydrophobe conformément à un mode de réalisation de l'invention.
[Fig 2] La figure 2 est un micrographe de type SEM d'un aérogel de silice hydrophobe préparé selon une méthode selon un mode de réalisation de l'invention.

Les exemples suivants sont donnés à titre illustratif et non limitatif de la présente invention.

### Exemple 1 : Synthèse d'un aérogel de silice

30 ml d'une solution de silicate de sodium (contenant environ 27% en poids de SiO₂) sont dilués dans 143 ml d'eau déionisée afin d'obtenir une solution de silicate de sodium contenant environ 6% en poids de SiO₂. Puis, la solution de silicate de sodium est passée au travers d'une résine échangeuse d'ions (Amberlite IR-120 H+) afin d'éliminer les ions Na⁺ et pour obtenir l'acide silicique. 130 ml d'acide silicique sont mélangés à 52 ml d'éthanol et 1 ml d'acide chlorhydrique (1 N) est alors ajouté. 18 ml d'agent sililant (isobutyltriéthoxysilane) sont ajoutés et mélangés. Après une heure d'agitation, 5 ml d'une solution d'ammoniaque (1 N) sont ajoutés et la gélification est réalisée en 10 minutes. Après murissement et lavage, l'hydrogel de silice est séché avec du CO₂ à basse température supercritique (LTSCD).

### Exemple 2 : Propriétés

L'aérogel de silice hydrophobe obtenu à l'exemple 1 est caractérisé comme suit :
Masse volumique apparente : 100 kg/m³
Angle de contact : 130°
Conductivité thermique : 0,0157 W/m.K

La masse volumique apparente est définie par le rapport entre sa masse et le volume de son enveloppe géométrique.

La mesure des angles de contact consiste à mesurer l'angle que forme une goutte d'eau en son point de contact avec la surface d'un solide (l'échantillon) et la phase gazeuse (ici, l'atmosphère). L'appareil utilisé pour les mesures d'angle de contact est un goniomètre Digidrop.

La méthode fluxmétrique a été utilisée pour mesurer la conductivité thermique. Deux plaques situées de part et d'autre de l'échantillon peuvent être chauffées ou refroidies ce qui permet de connaître précisément la différence de température entre la plaque chaude et la plaque froide. Un système d'acquisition de données permet de suivre l'évolution des flux et des températures et de déterminer la conductivité thermique.

L'observation microscopique a été réalisée sur un microscope électronique à balayage (Philips, XL30).

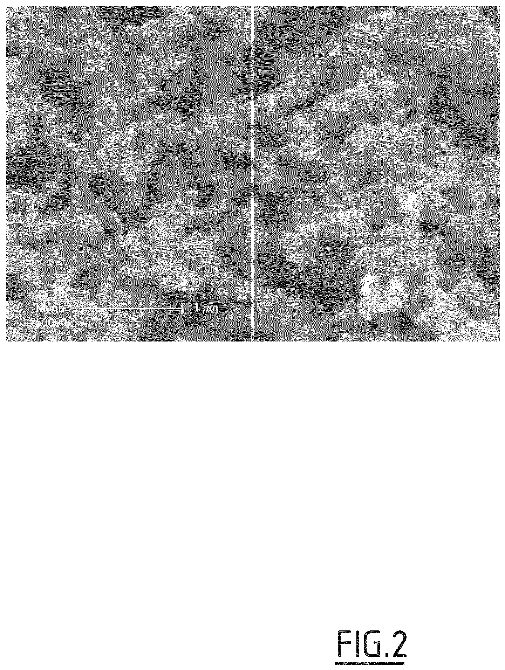

La nanostructure des aérogels de silice hydrophobe obtenus est illustrée à la Figure 2.

## Revendications

1. Procédé de préparation d'un aérogel de silice hydrophobe par synthèse « one pot » au moyen d'un précurseur de silice aqueux comprenant les étapes suivantes :;
- ii) mélange dudit précurseur de silice éventuellement traîté préalablement par i) passage d'une solution aqueuse dudit précurseur de silice contenant entre 4 et 31% en poids de SiO₂ à travers une résine échangeuse d'ions ; et d'un ou plusieurs alcools et ajustement à un pH compris entre 0 et 5 ;
- iii) ajout d'un organo-silane ;
- iv) gélification humide hydrophobe en présence d'une solution basique en tant que catalyseur ;
- v) séchage afin d'obtenir l'aérogel de silice hydrophobe ;
tel que le silane organique est choisi parmi les composés de formule (I) : 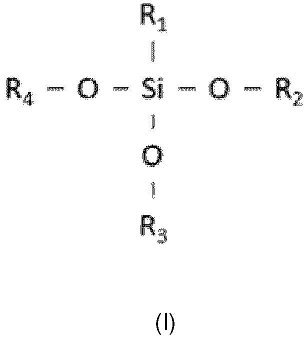 dans laquelle chacun des groupes R₄-R₄ identique ou différents est choisi indépendamment parmi les groupes alkyle en C1-C12 linéaire ou ramifié, ou les groupes alkènyle en C2-C12 linéaire ou ramifié.

2. Procédé de préparation selon la revendication 1, tel que le précurseur de silice aqueux est choisi parmi les solutions de silicate de sodium, solutions colloïdales de silice, les solutions de silice extraites d'une source riche en silice, telles que les déchets de bâtiments et de démolitions, les déchets de matériaux d'isolation à base de silice, le verre, et leurs mélanges.

3. Procédé de préparation selon l'une quelconque des revendications précédentes tel que la solution aqueuse de précurseur contient entre 4% et 8% en poids de SiO₂.

4. Procédé de préparation selon l'une quelconque des revendications précédentes, tel que l'alcool est choisi parmi le groupe consistant en éthanol, méthanol, alcool isopropylique, et leurs mélanges.

5. Procédé de préparation selon l'une quelconque des revendications précédentes, tel que l'ajustement du pH est effectué par ajout d'un acide inorganique choisi parmi l'acide chlorhydrique, l'acide nitrique, l'acide sulfureux et l'acide oxalique, et leurs mélanges.

6. Procédé de préparation selon la revendication 5 tel que la concentration de l'acide inorganique est comprise entre 0,1 et 2 mol.1⁻¹.

7. Procédé de préparation selon l'une quelconque des revendications précédentes tel que le silane organique est choisi parmi méthyltriméthoxysilane, méthyltriéthoxysilane, vinyltriméthoxysilane, isobutyltriéthoxysilane et isobutyltriméthoxysilane.

8. Procédé de préparation selon l'une quelconque des revendications précédentes tel que le silane organique est compris à hauteur de 1 à 50% en poids du gel humide.

9. Procédé de préparation selon l'une quelconque des revendications précédentes tel que la synthèse et la gélification sont effectuées à température et pression contrôlées, comprise entre 15 et 30°C, et de 1 à 200 bar, respectivement.

10. Procédé de préparation selon l'une quelconque des revendications précédentes tel que la solution basique est une solution d'ammoniaque de concentration comprise entre 0,1 et 2 mol.1⁻¹.

11. Procédé de préparation selon l'une quelconque des revendications précédentes tel que un murissement et/ou lavage est effectué préalablement à la mise en contact du gel humide avec un fluide au stade supercritique.

12. Procédé de préparation selon la revendication 11 tel que le lavage est effectué avec de l'éthanol, à température et pression comprises entre 20 et 50°C, et 1 et 200 bars, respectivement.

13. Procédé de préparation selon l'une quelconque des revendications précédentes tel que le gel humide est préparé sous forme de monolithe, granulés, ou composite avec des fibres organiques ou inorganiques.

14. Procédé de préparation selon l'une quelconque des revendications précédentes tel que le séchage est effectué à pression ambiante ou dans un ou plusieurs fluides dans des conditions supercritiques.

## Patentansprüche

1. Verfahren zur Herstellung eines hydrophoben Silica-Aerogels durch "One Pot"-Synthese unter Verwendung eines wässrigen Silica-Vorläufers, umfassend die folgenden Schritte:
- ii) Mischen des Silica-Vorläufers, optional vorbehandelt durch i) Leiten einer wässrigen Lösung des genannten Silica-Vorläufers, der zwischen 4 und 31 Gewichts-% SiO₂ enthält, durch ein Ionenaustauscherharz; und eines oder mehrerer Alkohole und Einstellen auf einen pH zwischen 0 und 5;
- iii) Hinzufügen eines Organosilans;
- iv) hydrophobes Nassgelieren in Anwesenheit einer basischen Lösung als Katalysator;
- v) Trocknen, um das hydrophobe Silica-Aerogel zu erlangen;
wobei das organische Silan ausgewählt ist aus den Verbindungen von Formel (1): 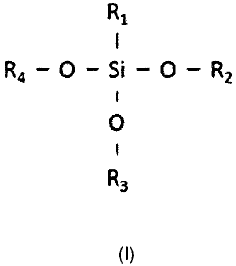
wobei jede der gleichen oder verschiedenen Gruppen R₁-R₄ unabhängig ausgewählt ist aus linearen oder verzweigten C1-C12-Alkylgruppen oder linearen oder verzweigten C2-C12-Alkenylgruppen.

2. Verfahren zur Herstellung nach Anspruch 1, wobei der wässrige Silica-Vorläufers ausgewählt ist aus Natriumsilikatlösungen, kolloidalen Silica-Lösungen, Silica-Lösungen, die aus einer Silica-reichen Quelle extrahiert werden, wie beispielsweise Bau- und Abbruchabfällen, Abfällen von Isoliermaterialien auf Silica-Basis, Glas und deren Gemischen.

3. Verfahren zur Herstellung nach einem der vorherigen Ansprüche, wobei die wässrige Lösung des Vorläufers zwischen 4 und 8 Gewichts-% SiO₂ enthält.

4. Verfahren zur Herstellung nach einem der vorherigen Ansprüche, wobei der Alkohol ausgewählt ist aus der Gruppe, bestehend aus Ethanol, Methanol, Isopropylalkohol und deren Gemischen.

5. Verfahren zur Herstellung nach einem der vorherigen Ansprüche, wobei das Einstellen des pH durch Hinzufügen einer anorganischen Säure erfolgt, die ausgewählt ist aus Salzsäure, Salpetersäure, schwefliger Säure und Oxalsäure und deren Gemischen.

6. Verfahren zur Herstellung nach Anspruch 5, wobei die Konzentration der anorganischen Säure zwischen 0,1 und 2 Mol.l⁻¹ ist.

7. Verfahren zur Herstellung nach einem der vorherigen Ansprüche, wobei das organische Silan ausgewählt ist aus Methyltrimethoxysilan, Methyltriethoxysilan, Vinyltrimethoxysilan, Isobutyltriethoxysilan und Isobutyltrimethoxysilan.

8. Verfahren zur Herstellung nach einem der vorherigen Ansprüche, wobei das organische Silan in einer Menge von 1 bis 50 Gewichts-% des Nassgels enthalten ist.

9. Verfahren zur Herstellung nach einem der vorherigen Ansprüche, wobei die Synthese und die Gelbildung bei kontrollierter Temperatur und kontrolliertem Druck von 15 bis 30 °C bzw. 1 bis 200 bar erfolgen.

10. Verfahren zur Herstellung nach einem der vorherigen Ansprüche, wobei die basische Lösung eine Ammoniaklösung mit einer Konzentration zwischen 0,1 und 2 Mol.l⁻¹ ist.

11. Verfahren zur Herstellung nach einem der vorherigen Ansprüche, wobei eine Reifung und/oder Wäsche vor dem Kontakt des Nassgels mit einem Fluid in überkritischem Stadium erfolgt.

12. Verfahren zur Herstellung nach Anspruch 11, wobei das Waschen mit Ethanol bei einer Temperatur und einem Druck zwischen 20 und 50 °C bzw. 1 und 200 bar erfolgt.

13. Verfahren zur Herstellung nach einem der vorherigen Ansprüche, wobei das Nassgel in Form eines Monolithen, Granulats oder eines Verbundstoffs mit organischen oder anorganischen Fasern hergestellt wird.

14. Verfahren zur Herstellung nach einem der vorherigen Ansprüche, wobei das Trocknen bei Umgebungsdruck oder in einem oder mehreren Fluiden unter überkritischen Bedingungen erfolgt.

## Claims

1. A method for preparing a hydrophobic silica aerogel by 'one-pot' synthesis using an aqueous silica precursor, comprising the following steps:
- ii) mixing the silica precursor, which is optionally pretreated by i) passing an aqueous solution of the silica precursor containing between 4 and 31 wt % SiO₂ through an ion exchanger resin; and one or more alcohols and adjusting it to a pH between 0 and 5;
- iii) adding an organosilane;
- iv) wet hydrophobic gelling in the presence of a basic solution as a catalyst;
- v) drying, in order to obtain the hydrophobic silica aerogel;
such that the organosilane is selected from compounds of formula (I): 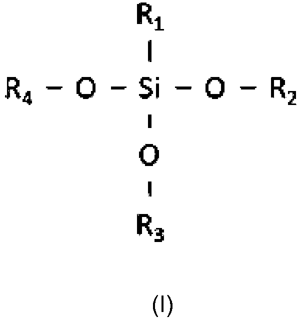
wherein each of the R₁ - R₄ groups is identical or different and independently selected from linear or branched C1-C12 alkyl groups and linear or branched C2-C12 alkenyl groups.

2. The method according to claim 1, such that the aqueous silica precursor is selected from sodium silicate solutions, colloidal silica solutions, silica solutions extracted from a silica-rich source such as building and demolition waste, waste from silica-based insulation material, glass, and mixtures thereof.

3. The method according to claim 1 or 2, such that the aqueous precursor solution contains between 4 and 8 wt % SiO₂.

4. The method according to any of the foregoing claims, such that the alcohol is selected from the group consisting of ethanol, methanol, isopropyl alcohol, and mixtures thereof.

5. The method according to any of the foregoing claims, such that the pH adjustment is carried out by adding an inorganic acid selected from hydrochloric acid, nitric acid, sulphurous acid, and oxalic acid, and mixtures thereof.

6. The method according to claim 5, such that the concentration of the inorganic acid is between 0.1 and 0.2 mol.l⁻¹.

7. The method according to any of the foregoing claims, such that the organosilane is selected from methyltrimethoxysilane, methyltriethoxysilane, vinyltrimethoxysilane, isobutyltriethoxysilane, and isobutyltrimethoxysilane.

8. The method according to any of the foregoing claims, such that the organosilane is included in the amount of 1 - 50 wt % of the wet gel.

9. The method according to any of the foregoing claims, such that the synthesis and gelling are carried out at a controlled temperature and pressure between 15 and 30 °C and 1 and 200 bar, respectively.

10. The method according to any of the foregoing claims, such that the basic solution is an ammonia solution having a concentration between 0.1 and 2 mol.l⁻¹.

11. The method according to any of the foregoing claims, such that ripening and/or washing is carried out prior to contacting the wet gel with a supercritical fluid.

12. The method according to claim 11, such that the washing is carried out with ethanol at a temperature and pressure between 20 and 50 °C and 1 and 200 bar, respectively.

13. The method according to any of the foregoing claims, such that the wet gel is prepared in the form of a monolith, granules, or composite with organic or inorganic fibres.

14. The method according to any of the foregoing claims, such that the drying is carried out at ambient pressure or in one or more fluids in supercritical conditions.
